# EUROPEAN PATENT APPLICATION

(11) **EP 1 071 266 A1**
(43) Date of publication of application: **24.01.2001**
(21) Application number: 00305964.9
(22) Date of filing: 13.07.2000
(51) Int. Cl.: H04M 3/42

(54) **Telephone recording systems**

(30) Priority: 19.07.1999 GB 9916902
(71) Applicant: INTELLPROP LIMITED, Guernsey, Channel Islands (GB)
(72) Inventor: Wilson, Jeffrey, Fareham, Hampshire PO16 7OH (GB)
(74) Representative: Pilch, Adam John Michael

(57) **Abstract**

A voice services equipment [VSE] (16) is connected to a PABX (10) such that, when a call on an incoming line (12) is received at an extension (24), it can be transferred by the extension's user to follow a path via the VSE (16), back to the PABX (10) and then back to the extension (24). The VSE (16) can be set up to record the telephone conversation and to deposit the recording subsequently in a voice mail box associated with the extension's user.

## Description

This invention relates to telephone recording systems which can be used to record telephone conversations, in particular telephone conversations connected through telephone exchanges.

It is known for answering machines or other recording equipment to be associated with individual telephones. The usual operational mode for such answering machines is to record a caller's message when the called party is absent from the vicinity of the telephone. However, it is possible with certain types of such machines to provide an alternative mode of operation in which a telephone conversation may be recorded for subsequent use, for example to produce a telephone transcript or to play back the recorded conversation to other parties. In an office environment or in other larger premises, such answering machines may be provided at selected telephone extensions connected to a PABX (private automatic branch exchange). A difficulty arises if it is desired for a number of people, for example members of a working team, subsequently to listen to the recorded conversation. The recording can be played back to team members individually over the PABX but this a lengthy operation, particularly if the team is large.

According to one aspect of the invention there is provided a telephone recording system comprising:
a telephone exchange for providing switched connection between selected telephone lines connected to the exchange; and
a voice services equipment including a call recording means and having incoming and outgoing lines connected to the exchange;
   wherein the telephone exchange and the voice services equipment are operable, in response to user input from an extension connected to the exchange, to divert a call involving that extension to follow a path from the exchange firstly to the voice services equipment, secondly back from the voice services equipment to the exchange and thirdly to the extension, whereby the diverted call can be recorded by the call recording means.

According to another aspect of the invention there is provided a telephone recording system comprising:
a telephone exchange for providing switched connection between selected telephone lines connected to the exchange; and
a voice services equipment including a call recording means and having incoming and outgoing lines connected to the exchange;
   wherein the telephone exchange and the voice services equipment are operable, in response to user input from a telephone connected to the exchange, either to initiate a call which follows a path from the exchange through the voice services equipment back to the exchange and out to the called party or to divert an incoming or outgoing call so that it passes through the voice services equipment, whereby the initiated or diverted call can be recorded by the call recording means.

The invention will now be described by way of example with reference to the accompanying drawings, throughout which like parts are referred to by like references, and in which:
Figure 1 is a block diagram of a telephone exchange and a voice services equipment connected according to an embodiment of the invention;
Figure 2 is a diagram similar to Figure 1, showing a switch path during a first phase of operation;
Figure 3 is a diagram similar to Figure 1, showing a diverted switch path during a second phase of operation; and
Figure 4 is a diagram similar to Figure 1, showing a completed switch path during a third phase of operation.

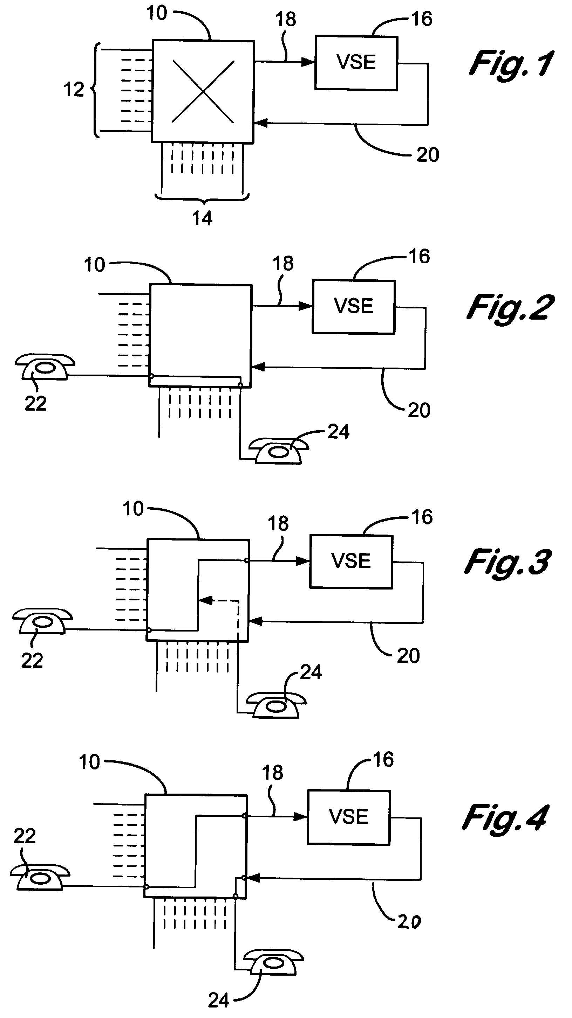

Referring to Figure 1 of the drawings, there is shown a telephone exchange such as a PABX 10 connected to external lines 12, internal lines 14 and a voice services equipment (VSE) 16. The VSE 16 may, for example, be a Telsis Hi-Call, certain aspects of which are described in International Patent Application Publication No. WO 92/22165. As shown in Figure 1, the VSE 16 is connected with incoming lines 18 from the PABX 10 and outgoing lines 20 returning to the PABX 10. This type of connection is known as a "tromboned" connection. As described in Publication No. WO 92/22165, the VSE 16 has the capability of interactive voice communication with appropriate switching of incoming and outgoing line connections.

The operation of the circuit shown in Figure 1 will now be described, in the context of the problem discussed above, namely that of recording a telephone conversation for subsequent dissemination to a number of other personnel. As shown in Figure 2, an external caller on a telephone 22 calls into the PABX 10 and is switched to an extension 24 via a switched path in the PABX 10. The switching can typically be achieved automatically by the external caller dialling in the extension number of the extension 24. If the person at the extension 24 should wish to record the telephone conversation, he can inform the caller accordingly; alternatively, if it is not wished for the caller to know that the call is being recorded, the caller can be told that the called party needs to move to another extension. In either case, the called party at the extension 24 arranges for the call to be diverted via the VSE 16, as shown in Figure 3. This can be done, for example, by having previously assigned an extension number to the VSE 16; the called party at the extension 24 then simply transfers the call to the VSE 16 by whatever mechanism is provided for this purpose in the PABX 10, such as by activating a call transfer key on the extension 24 followed by the VSE extension number. The VSE 16 can be set up either to accept such a transferred call as a default request to record the subsequent conversation, or alternatively the called party at the extension 24 may receive a voice request from the VSE 16 such as "Is the conversation to be recorded?". Upon receiving either an affirmative voice reply or possibly a predetermined input key number, the VSE 16 is set into the conversation recording mode. When the called party clears down the call at the extension 24, the call transfer to the VSE 16 is completed as shown in Figure 3. At this point, the VSE 16 calls the extension 24 via one of the outgoing lines 20 and the PABX 10, as shown in Figure 4. The VSE 16 has details of the extension number of the extension 24, for example by means of direct dial in (DDI) or calling line identification (CLI). Alternatively, if desired, the extension number may have been provided to the VSE 16 by key number input by the called party in response to a request from the VSE 16, particularly in the case that the called party actually wishes to receive the call at another extension. In order to allow for the possibility that a different call for the extension 24 may come in between clear down of the extension and call-back from the VSE 16, the VSE 16 may be set up to ring back the desired extension at regular intervals until the extension is no longer engaged. An appropriate message may be given to the caller by the VSE 16 during this time. Once the VSE 16 has achieved communication with the extension 24, the caller once more has voice communication with the called party at the extension 24, and the telephone conversation is recorded by the VSE 16. Recording can be initiated at any suitable time, such as when the called party answers at the extension 24, and this can be achieved automatically in a convenient manner.

Once the conversation has been terminated by either the caller or the called party clearing down the call, the VSE 16 is arranged to put the recording of the conversation into the called party's voice mail box, for later dissemination to other personnel such as other team members. It may additionally be possible for the recorded conversation to be put directly into other personnel's voice mail boxes, in accordance with suitable pre-programming of the VSE 16.

Call transfer via the VSE 16 for recording of the call has been described in the context of a call from an external caller being received at an extension 24, the called party at the extension 24 deciding that the call is to be recorded and initiating the connection to the VSE 16. However, the system is equally applicable to a call initiated from the extension 24, for example in the situation that the party at the extension 24 realises that the call should be recorded after the call has been initiated. In that case, as shown in Figure 2, the call is made from the extension 24 via the PABX 10 to a telephone 22 on the public network. When the party at the extension 24 realises, during the conversation, that recording of the call is required, the party can divert the call via the VSE 16, for example by call transfer, as shown in Figure 3, the VSE 16 then connecting to the extension 24 via the outgoing line 20 as shown in Figure 4.

Furthermore, the system may also be applicable in the situation that the party at the extension 24 wishes to record the complete call or part of the call and can take action to do so prior to initiating the call. In that case, the system can be set up to respond to a different access code to that normally used for obtaining an outside line (the normal access code being typically initiated by dialling "9"); when the party at the extension dials the different access code, the call will be routed from the extension 24 via the incoming line 18 to the VSE 16, then back from the VSE 16 via the outgoing line 20 to the PABX 10, and finally to the required number on the public network. The VSE 16 could be set either to record the whole conversation or only selected parts of the conversation upon receiving appropriate commands either from telephone signalling means or over a data interface.

Although the system has been described in the context of recording telephone conversations arising from external calls made to an exchange, it is also applicable to calls made internally. Accordingly, the operation of the system may involve initiation of a call which follows a path from the exchange through the voice services equipment back to the exchange and out to the called party; alternatively or additionally, the system may operate such that an incoming or outgoing call to/from the exchange is diverted so as to pass through the voice services equipment, thereby allowing recording of the diverted call by the recording facility of the voice services equipment.

## Claims

1. A telephone recording system comprising:
a telephone exchange (10) for providing switched connection between selected telephone lines (12,14) connected to the exchange (10); and
a voice services equipment (16) including a call recording means and having incoming and outgoing lines (18,20) connected to the exchange (10);
wherein the telephone exchange (10) and the voice services equipment (16) are operable, in response to user input from an extension (24) connected to the exchange (10), to divert a call involving that extension (24) to follow a path from the exchange (10) firstly to the voice services equipment (16), secondly back from the voice services equipment (16) to the exchange (10) and thirdly to the extension (24), whereby the diverted call can be recorded by the call recording means.

2. A telephone recording system comprising:
a telephone exchange (10) for providing switched connection between selected telephone lines (12,14) connected to the exchange (10); and
a voice services equipment (16) including a call recording means and having incoming and outgoing lines (18,20) connected to the exchange (10);
wherein the telephone exchange (10) and the voice services equipment (16) are operable, in response to user input from a telephone (24) connected to the exchange (10), either to initiate a call which follows a path from the exchange (10) through the voice services equipment (16) back to the exchange (10) and out to the called party or to divert an incoming or outgoing call so that it passes through the voice services equipment (16), whereby the initiated or diverted call can be recorded by the call recording means.

3. A telephone recording system according to claim 1 or claim 2, wherein the voice services equipment (16) is connected to the telephone exchange (10) as an extension of the exchange (10), wherein a call to be recorded can be transferred to the voice services equipment (16).

4. A telephone recording system according to claim 1, claim 2 or claim 3, wherein the voice services equipment (16) is operable to call back the exchange (10) once the call has been diverted to the voice services equipment (16).

5. A telephone recording system according to claim 4, wherein the voice services equipment (16) is operable to attempt repeated calls to the extension (24) if the extension (24) is engaged.

6. A telephone recording system according to any one of the preceding claims, wherein the voice services equipment (16) is operable to put the recorded call into a voice mail box associated with the user of the extension (24).
